# EUROPEAN PATENT SPECIFICATION

(11) **EP 1 936 551 B1**
(45) Date of publication and mention of the grant of the patent: **03.03.2010**
(21) Application number: 06127042.7
(22) Date of filing: 22.12.2006
(51) Int. Cl.: G06Q 10/00, H04L 12/58

(54) **Method and system for email notification**
Verfahren und System für E-Mail-Benachrichtigung
Procédé et système de notification d'e-mail

(43) Date of publication of application: 25.06.2008
(73) Proprietor: Research In Motion Limited, Waterloo, Ontario N2L 3W8 (CA); Teamon Systems, Inc., Issaquah, Washington 98027 (US)
(72) Inventor: Reddy, Raymond, Kitchener N2M 5G9 (CA); Gorty, Suryanarayana, Redmond, WA 98053 (US)
(74) Representative: Patel, Binesh

(56) References cited:
- WO-A-00/11585
- WO-A-99/22576
- US-A1- 2003 154 254
- US-A1- 2004 019 649
- KLENSIN J: "Request for Comments (RFC) 2821: Simple Mail Transfer Protocol" NETWORK WORKING GROUP REQUEST FOR COMMENTS, XX, XX, vol. 2821, April 2001 (2001-04), pages 1-79, XP003010059
- G-LOCK SOFTWARE: "G-Lock Email Processor, Reference Guide" INTERNET CITATION, [Online] 2 October 2003 (2003-10-02), XP002435360 Retrieved from the Internet: URL:http://web.archive.org/web/20031002053 551/http://mirror1.glocksoft.com/EmailProc essorManual.pdf> [retrieved on 2007-05-29]

## Description

### FIELD

The present application relates to email notification and more particularly a method and system for email notification using auto-forwarding, and a modified mail sender.

### BACKGROUND

Electronic data communications, particularly electronic mail (email), is increasingly prevalent for both business and personal uses. Email services may be offered to users by Internet Service Providers (ISPs). Such businesses host a user's email account providing the user with a mailbox and a user interface with which to send and receive email. Many email users desire to have email communication capabilities available to them on a round-the-clock basis and at their finger tips. Users with handheld data communication devices often desire to use their ISP-hosted email services through their handheld devices such as cellular phones, personal data assistants (PDA) and the like having email capabilities to allow the users to have quick access to messages and remain connected to others.

A mail notification receiver alerts a mail retrieval system when new incoming electronic mail arrives in the user's ISP mailbox. Once the mail retrieval system is alerted of the presence of new mail, it will then automatically retrieve the new mail from the user's mailbox and send it off to the user's device where the mail can be read (e.g. handheld or desktop). Many mail retrieval systems are implemented using a polling approach where the mail retrieval system periodically requests new electronic mail from a user's ISP mailbox. This method of mail retrieval has several disadvantages. Under a polling system, the user is only notified that new electronic mail has arrived after the mail retrieval system has made a polling request and not necessarily when the mail in fact arrives in the user's mailbox. Consequently, the receipt of the electronic mail suffers from a time delay by an amount determined by a preset polling interval (the period between requests to see if new mail has arrived in the user's mailbox). Another difficulty is that where the user has several mailboxes, the mail retrieval system must poll each mailbox separately. This too is time consuming and resource intensive, requiring communication between the mail retrieval system and multiple ISP mail storage servers.

An alternative approach involves building and integrating a dedicated notification server into the ISP's current architecture. The notification server may poll more efficiently and at more frequent intervals, detect incoming mail when it reaches the mail storage server and before it reaches a user's mailbox, scan data buffers for new incoming mail, or detect new mail as it is being directed to a user's mailbox. However, implementation of such an alternative approach requires a significant amount of resources that the ISP may be unable or unwilling to pay.

A solution which addresses one or more of these issues is therefore desired.

Patent Application US2004/0019649, published on 29.01.2004, relates to the provision of a new mail notification by a mail server to an electronic mail receiving terminal device using a push protocol such as SMTP. The new mail notification is a customised mail with simple contents and a small amount of data. The remote mail receiving terminal device is automatically triggered to request the new electronic mail in response to receiving the new mail notification message.

### Summary

There is provided a method and system for email notification as defined in the independent claims 1 and 11.

In accordance with one aspect, there is provided a method of providing mail notification of new email received at a user's mailbox stored by a mail storage system. The method comprises a series of steps inducing: receiving the new email at a user's mailbox stored by the mail storage system; auto-forwarding the new email to a mail notification sender system; transmitting at least a portion of the new email to a mail notification receiver system; interrupting the transmission of said portion of the new email to the mail notification receiver system with a negative completion code; defining and transmitting a bounced-mail email with said negative completion code from the mail notification sender system to the mail storage system; and intercepting and capturing said bounced-mail email at the mail storage system before it reaches the user's mailbox.

According to an embodiment, the mail notification sender system may consist of a separate entity or server configured to receive the auto-forwarded new email and to transmit at least a portion of the email to the mail notification receiver system. The mail notification sender system may further be configured to filter the bounced-mail email prior to being received by the mail storage server. Alternatively, the mail notification sender system may be implemented directly within the existing dedicated mail sender of the Internet Service Provider. The mail sender is configured to send all outbound emails received from the mail storage server and may be used to send at least a portion of the new email to the mail notification receiver system.

According to another aspect, an existing mail storage server with auto-forwarding capability (such that it can directly receive and send emails) can be modified to include the functionary of the mail notification sender system. In this manner, the modified mail storage server transmits at least a portion of the new email to the mail notification receiver system.

The method may further comprise the step of including: a subscription agent module within said mail notification sender system configured for maintaining subscriptions for mail notification and controlling a mail sender module in response to said subscriptions; a subscription manager module within said mail notification receiver system configured for communicating to a subscription agent module whether mail notification should be enabled or disabled; or a subscription manager module within a mail retrieval system configured for communicating to a subscription agent module whether mail notification should be enabled or disabled.

In another aspect, there is provided a method of retrieving new email received at a user's mailbox stored by a mail storage system. The method comprises integrating a mail notification receiver system with a mail retrieval system, said mail notification receiver system configured to trigger said mail retrieval system to retrieve said new email when said mail notification receiver system receives at least a portion of said new email in response to said new email arriving in said user's mailbox.

In one embodiment, there is provided a method of configuring a system for providing notification of a new email received at a user's mailbox stored by a first mail storage system for triggering retrieval of the new e-mail by a second mail storage system. The method comprises configuring a mail sender to forward a notification email comprising at least a portion of the new email to the second mail storage system; and configuring the mail sender to interrupt the forwarding in response to a pre-determined negative completion code received from the second mail storage system. The method may further comprise configuring the first mail storage system to filter a bounced email prior to entering the user's mailbox, said bounced email received in accordance with the pre-determined negative completion code. In addition, the mail sender may be configured to include a subscription agent module to maintain notification subscription information for the user's mailbox, wherein, the step of configuring the mail sender to forward comprises configuring the mail sender to forward in response to the notification subscription information.

In one embodiment, the mail sender may be further configured to provide a mail listener module, a mail processing module, and an SMTP client module, said mail listener module to receive the new email from said first mail storage system and to redirect the new email to said mail processing module, said mail processing module configured to define the notification email by removing the new email's body portion and forward the notification email to the SMTP client module, said SMTP client module configured to send said portion of the new email to the second mail storage system. The mail sender may additionally be configured to filter the received pre-determined negative completion code to ignore the incomplete forwarding of the notification email.

In another aspect, there exists a method of providing notification of a new email received at a user's mailbox stored by a first mail storage system for retrieval by a second mail storage system. The method comprises receiving at an SMTP mail notification sender coupled to the first mail storage server an auto-forwarded new email; forwarding a notification email comprising at least a portion of the new email to said second mail storage system for triggering retrieval of the new email from said first mail storage system; and interrupting the forwarding in response to a pre-determined negative completion code received from said second mail storage system. The method may further comprise transmitting a bounced-mail email to said first mail storage system in response to receiving the pre-determined negative completion code. In one aspect, the first mail storage server may further be configured to filter the bounced-mail email prior to delivery to the user's mailbox.

In one aspect, there is provided a method of triggering a second mail system to retrieve a new email received at a user's mailbox of a first mail storage system. The method comprises receiving a notification email for a user, said notification email comprising at least a portion of said new email auto-forwarded from said first mail storage system; transmitting a pre-determined negative completion code in response to receiving the notification email to interrupt said step of receiving; and triggering said second mail system to retrieve said new email from said first mail system. The method may further comprise forwarding the retrieved new email to a user's data communication device. In one embodiment, the method further comprises collecting at least two notification emails, each corresponding to a respective new email for the user; and wherein the step of triggering comprises triggering the SMTP mail notification sender to retrieve each of the new emails from said first mail storage server.

In accordance with one embodiment, there is provided a system for providing notification of a new email received at a user's mailbox stored by a first mail storage system. The system comprises a mail sender configured to receive the new email from said first mail storage system. The mail sender comprises a mail listener module configured to receive the new email; an SMTP client module configured to transmit a notification email comprising at least a portion of the new email to a mail notification receiver system, said SMTP client module further configured to interrupt the transmitting in response to receiving a pre-determined negative completion code from the mail notification receiver system.

!n one embodiment, there is provided a system for receiving notification of a new email received at a user's mailbox stored by a mail storage system. The system comprises a mail notification receiver configured to receive a notification email comprising at least a portion of the new email from a mail notification sender system and configured to trigger a mail retrieval system to retrieve said new email from said mail storage system, wherein the mail notification receiver is further configured to provide a pre-determined negative completion code to interrupt said step of receiving.

System and computer media aspects will also be apparent to those of ordinary skill in the art.

### BRIEF DESCRIPTION OF THE DRAWINGS

In order that the subject matter may be readily understood, embodiments are illustrated by way of examples in the accompanying drawings, in which:

Figure 1A is a block diagram which illustrates components of an example mail notification system in accordance with one embodiment, implementing auto-forwarding, a modified mail sender, and a bounced-mail filter;

Figure 1B is a block diagram illustrating a modified mail sender in accordance with an embodiment;

Figure 1C is a block diagram illustrating a modified mail sender implementing bounced email filtration in accordance with an embodiment;

Figure 2 is a block diagram showing message flow of a SMTP conversation between an example mail notification sender and an example modified mail sender, implementing a negative completion code;

Figure 3 is a detailed diagram of the mail notification sender of Figure 1;

Figure 4 is a flowchart showing operations for retrieving new email utilizing the non-polling mail notification receiver illustrated in Figure 1;

Figure 5 is a block diagram which illustrates a mail notification system in accordance with another embodiment incorporating a subscription system;

Figure 6 is a detailed diagram of the mail notification sender of Figure 5; and

Figure 7 is a flowchart showing operations for retrieving new email utilizing the non-polling mail notification receiver illustrated in Figure 5.

### DETAILED DESCRIPTION

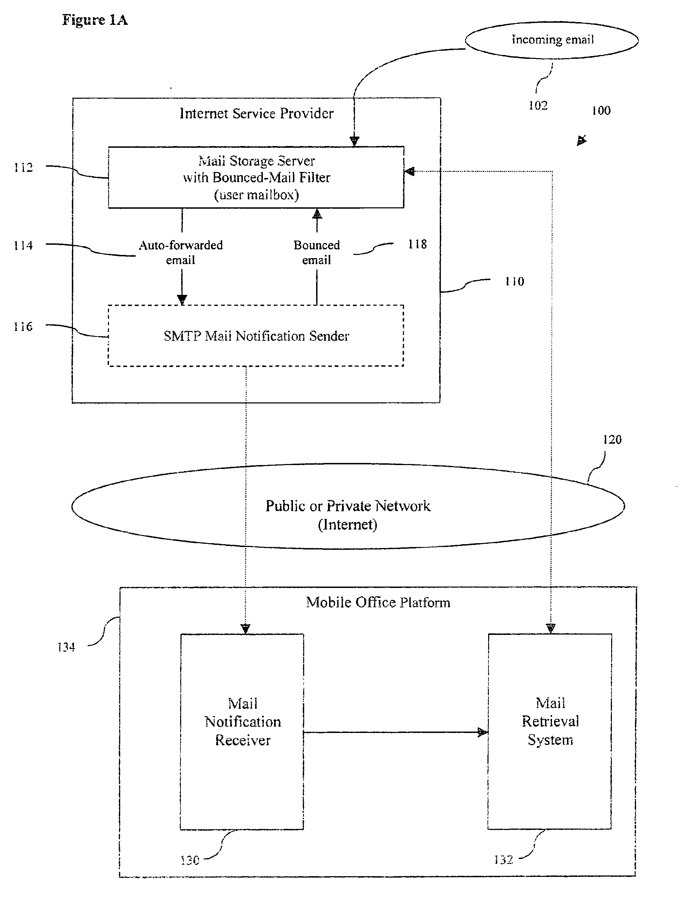

Figure 1A is a block diagram showing components of a non-polling mail notification system 100 in accordance with an embodiment. Briefly, a mail notification sender is employed to receive auto-forwarded email from a user's ISP mail storage server to send an email-based notification for communication to a mail notification receiver.

Persons of ordinary skill in the art will appreciate that teachings herein are applicable to mail storage servers with auto-forwarding capability and though a separate mail notification sender is discussed in the examples, no limitations should be imposed as the functions of the mail notification sender can be incorporated into an existing mail storage server. For example, a mail storage server that can directly send or receive emails can be configured to include the functionality of the SMTP mail notification sender. In this manner, the mail storage server would automatically forward at least a portion of the email received at the user's mailbox to the mail notification receiver.

Referring to Figure 1A, system 100 comprises ISP-based components 110 coupled for communication to a public or private network such as the Internet 120 for communicating email notifications to coupled mobile office platform components 134. ISP-based components comprise a mail storage server 112 for receiving new user email and storing the new email in user mailboxes and a mail notification sender 116 coupled for data communication to mail storage server 112 to receive auto-forwarded email 114 and communicate at least a portion of the email as described further below. Mobile office platform components comprise a mail notification receiver 130 for receiving said portion of the forwarded email and communicating same to a mail retrieval system 132 to trigger a mail fetch cycle to retrieve mail from a user's mailbox, as described in detail further below.

Mail storage server 112 may comprise commonly available hardware and software such as a network-enabled computer with one or more mail server applications (e.g. Microsoft Exchange, Sendmail, Exim, etc.) installed and configured to handle email communications (e.g. Post Office Protocol 3 (POP3) and Simple Mail Transfer Protocol (SMTP)). In accordance with the present embodiment, mail storage server 112 is configured to automatically forward a copy of the new email received at a user's mailbox to the mail notification sender 116 using an auto-forward feature of the mail storage server software. Also, in accordance with the present embodiment, mail storage server 112 is configured to ignore certain bounced-mail emails using a mail filter feature of the mail storage server software ("bounced-mail filter"). Said bounced-man emails may be restricted to those bounced-mail emails containing a customized negative completion code and will be described in further detail below.

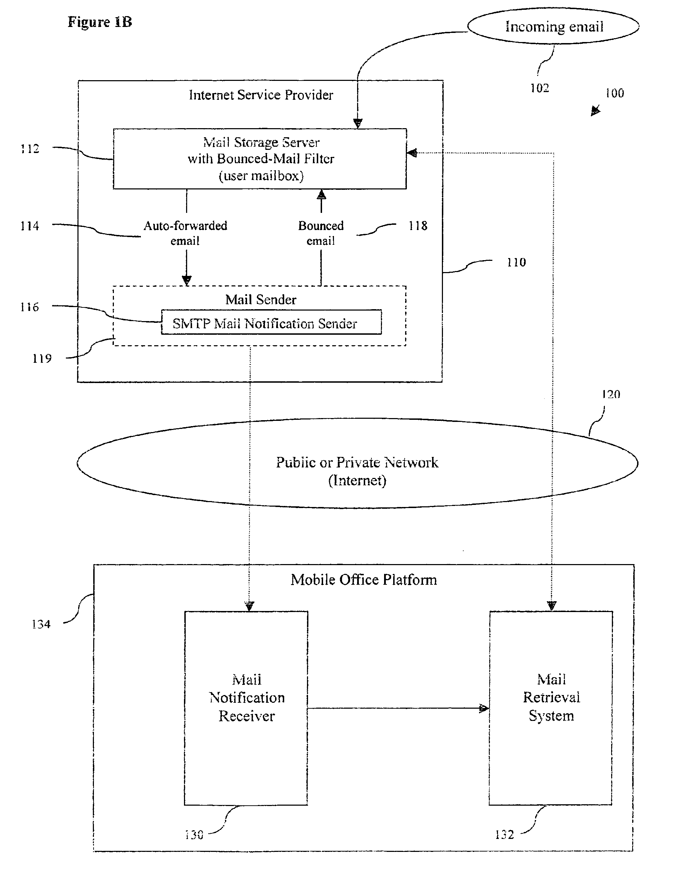

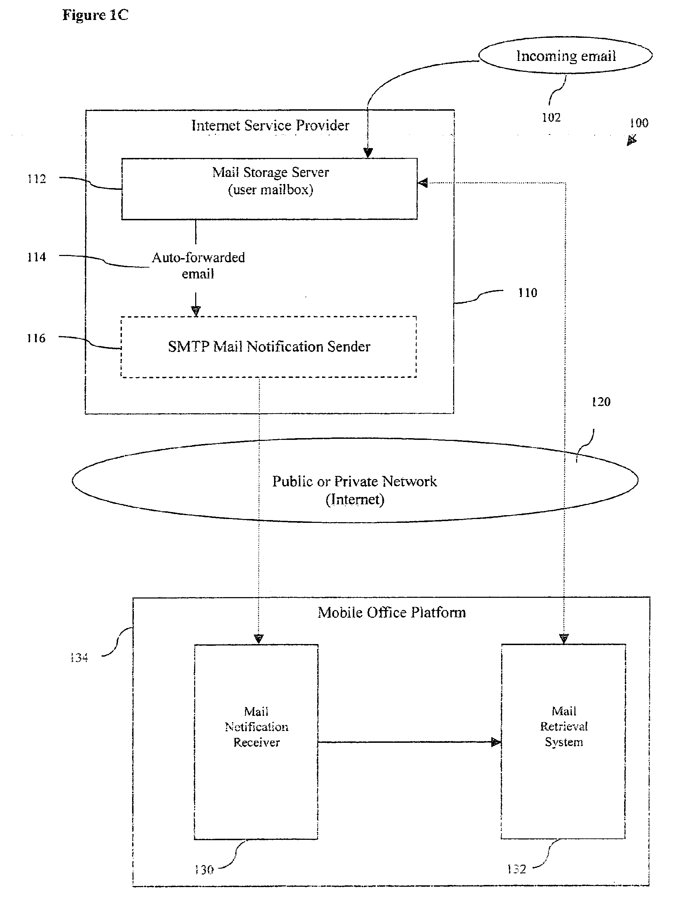

In addition, it would be understood that although the mail storage server shown in Figure 1A and 1B includes a bounced mail filter, the filtering function or blocking of bounced emails having a negative completion code prior to entering the user's mailbox could be implemented in other ways. For instance, the mail storage server may be configured to drop the bounced emails having a negative completion code. Alternatively, SMTP rules or specific application level configuration options may be used to drop the bounced emails having a negative completion code. In another example, as shown in Figure 1C, the SMTP mail notification sender 116 may be configured to directly block the bounced emails resulting from the mail notification process. In this case, the bounced email would be dropped prior to entering the mail storage server 112. Other ways in which the filtering function may be implemented will occur to those skilled in the art.

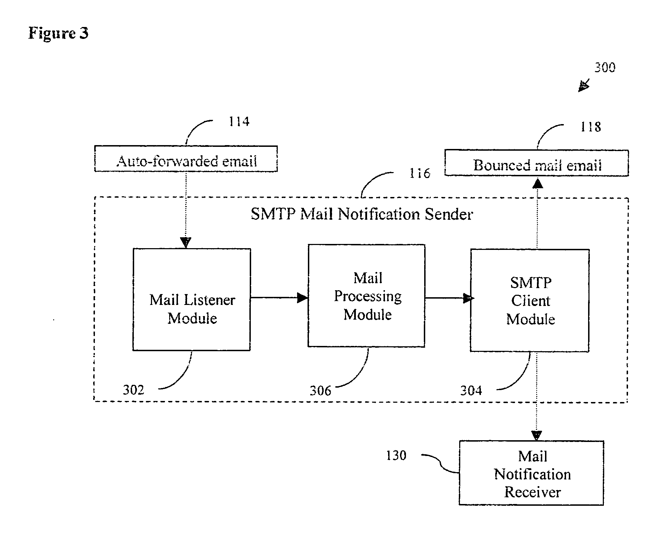

For convenience, Figures 3-7 are shown with a mail storage server having a bounced mail filter but it will be understood that the filtration of the bounced email may be performed by any of the methods described herein.

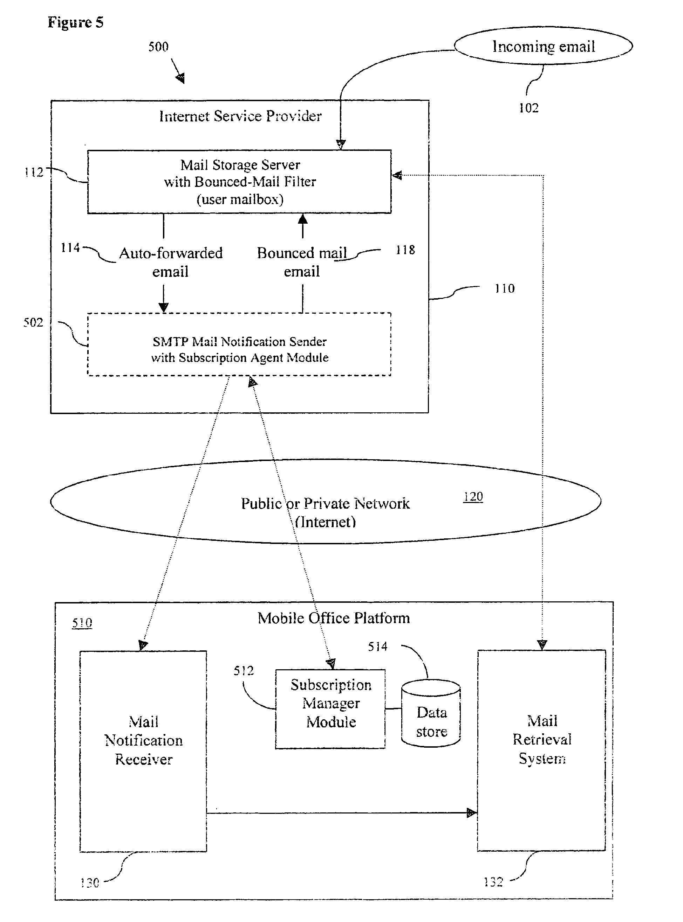

Persons of ordinary skill in the art will appreciate that teachings herein are applicable to mail storage servers with auto-forwarding capability and though a mail storage server configured with the auto-forward feature enabled is discussed in the examples, no imitations should be imposed. A subscription system may be used to enable or disable the auto-forward feature in relation to a user's mailbox on the mail storage server. A subscription system is illustrated in Figures 5, 6, and 7 and will be described in further detail below.

Mail notification sender 116 may comprise commonly available hardware and software, such as a network-enabled computer with a mail server application (e.g. Microsoft Exchange, Sendmail, Exim, etc.) installed and configured to handle email communications over SMTP, with which to define a server for receiving email 114, for communicating the email to mail notification receiver 130, and for communicating a bounced email message to mail storage server 112. Alternatively, as will be described, it would be understood that the mail notification sender 116 may be implemented on existing hardware provided by the ISP's mail sender system.

Mail notification receiver 130 may comprise commonly available hardware and software, such as a network-enabled computer with a mail server application (e.g. Microsoft Exchange, Sendmail, Exim, etc.) installed and configured to handle email communications over SMTP, with which to define a server for receiving email and for communicating the email to mail retrieval system 132. Additionally, in accordance with the present embodiment, mail notification receiver 130 is configured to interrupt the transmission of forwarded emails from mail notification sender 116 using a modified version of SMTP enabled server software. Said modifications to the software may cause the software to answer the "DATA" command of an SMTP transmission from the mail notification sender with a customized 500 level (i.e. any number from 500 to 599) negative completion code, different from those already recognized under Request for Comments (RFC) 821.

As mentioned earlier, it would be understood by a person of ordinary skill in the art that the mail notification sender 116 may be implemented in a number of different ways. For instance, referring to Figure 1A, the mail notification sender 116 was shown as a separate entity to send outbound mails using SMTP, for example. Alternatively, referring to Figure 1B, shown is a mail notification system 100 in accordance with one embodiment. As shown in Figure 1B, an ISP's existing mail sender 119 is coupled to the mail storage server 112 for receiving the auto-forwarded email 114. In this manner, the ISP's existing mail sender 19 that sends out all outbound emails, is configured to include the functionality of the SMTP mail notification sender 116 thus transmitting at least a portion of the received new email to the mail notification receiver 130. it would be understood that the mail sender 119, may for example, use SMTP. One advantage of this implementation is that by configuring the mail sender 119 to include the SMTP mail notification sender 116, it allows the use of an ISP's existing mail sender without additional hardware thereby improving adaptability into existing ISP environments. As discussed earlier, the mail storage server may also be modified to include the functionality of the mail notification sender 116 directly.

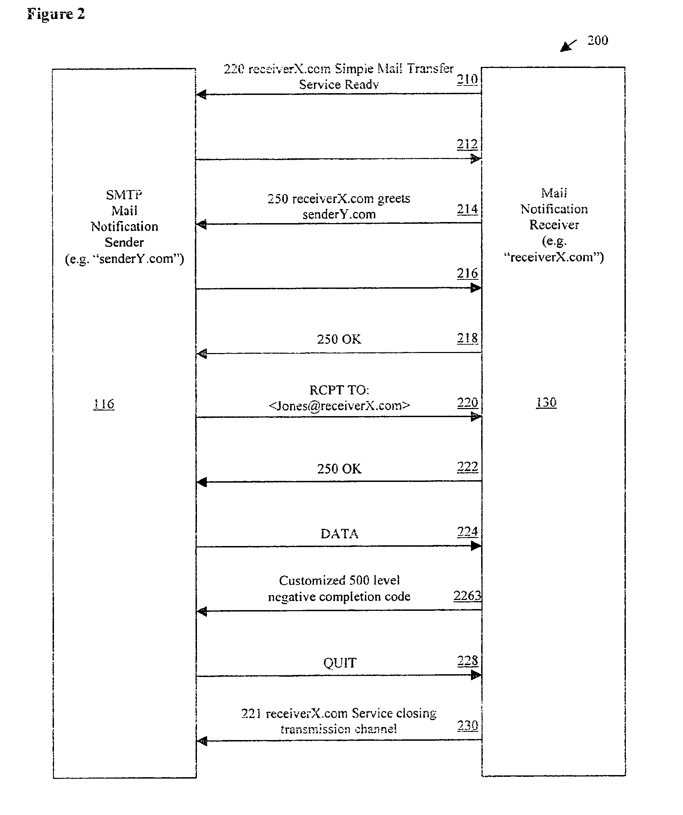

Figure 2 is a block diagram showing message flow of an example SMTP conversation 200 between SMTP mail notification sender 116 and mail notification receiver 130 in accordance with the present embodiment. The conversation utilizes codes and instructions in accordance with RFC 821, the recognized standard for SMTP. At step 210, mail notification receiver 130 utilizes SMTP code "220" to announce its SMTP service for domain "receiverX.com" as being ready to receive the transmission. At step 212, SMTP mail notification sender 116 utilizes SMTP command "HELO" to identify itself as being the sender SMTP server. At step 214, mail notification receiver 130 acknowledges acceptance of SMTP mail notification sender 116's last command utilizing SMTP code "250" and identifies itself as the receiver SMTP server in the connection greeting reply. At step 216, SMTP mail notification sender 116 utilizes SMTP command "MAIL" to initiate the mail transaction and to provide a reverse source route via which mail notification receiver 130 may return non-delivery notices to the sender. Said source route identifies a host (i.e. mail server) or list of hosts through which the email has already been relayed. At step 218, mail notification receiver 130 utilizes SMTP code "250" to acknowledge acceptance of SMTP mail notification sender 116's requested mail action. At step 220, SMTP mail notification sender 116 utilizes SMTP command "RCPT" to identify an individual recipient of the mail data and to provide a forward source route via which mail notification receiver 130 must relay the email in order for the email to reach its ultimate destination. At step 222, mail notification receiver 130 utilizes SMTP code "250" to acknowledge acceptance of SMTP mail notification sender 116's requested mail action.

At step 224, SMTP mail notification sender 116 utilizes the SMTP command "DATA" to announce its intention to send the data of the email ("mail data") and that all information sent following this command should be treated as mail data until the character sequence "<CRLF>.<CRLF>" is sent, where "<CRLF>" indicates the termination of a character string.

At step 226, mail notification receiver 130 utilizes a customized 500 level SMTP negative completion code to preclude SMTP mail notification sender 116 from sending the mail data. As mentioned above, under standard RFC 281 procedure, once a mail sender transmits the SMTP "DATA" command, the mail receiver must reply with SMTP code "354" in order for mail data to be sent. By sending a 500 level negative completion code in response to SMTP mail notification sender 116's transmission of the SMTP "DATA" command, mail notification receiver 130 is indicating that the "DATA" command was not accepted and the requested action did not occur, and that SMTP mail notification sender 116 should not repeat the request. At step 228, SMTP mail notification sender 116 utilizes SMTP command "QUIT" to request that mail notification receiver 130 close the transmission channel. At step 228, mail notification receiver 130, utilizes SMTP code "221" to acknowledge that it will be closing the transmission channel and then closes the SMTP connection with SMTP mail notification sender 116.

Since only a minimal amount of data is required to notify of the presence of a new message, transferring an entire auto-forwarded email to a remote notification service would be inefficient, use excessive bandwidth, and potentially pose privacy concerns when dealing with third-party providers. For example, if an entire email is forwarded to the mail notification receiver, this may allow a third party to access the email and would compromise security.

Stopping the transmission of the notification email before the data of the body of the message is sent may mitigate at least some of these concerns.

By employing a distinct 500 level negative completion code (i.e. a 500 level SMTP code not already employed under the RFC 281 standard), the bounced-mail filter at mail storage server 112 can differentiate between a bounced-mail email resulting from the mail notification process and a legitimate bounced-mail email not resulting from the mail notification process. This will save the user from having to read through an unwanted bounced email message for each new legitimate email received. As well, without the bounced-mail filter, an indefinite loop may be created such that each bounced-mail message received at the user's mailbox would trigger the notification process just as any legitimate email would. Such a loop could consume the resources of the ISP, the mobile office platform, and the user's handheld device at an exponential rate and negate any positive effects.

Persons of ordinary skill in the art will appreciate that teachings herein are applicable to all SMTP conversations employing the RFC 281 standard, and though specific basic SMTP commands, codes, and instructions are discussed in the examples, no limitations should be imposed as the SMTP conversation may include additional SMTP commands, codes, and instructions.

Figure 3 is a block diagram showing further detail of the mail notification sender 116 of Figure 1. Mail notification sender 116 comprises a mail listener module 302, a mail processing module 306 and an SMTP client module 304.

Mail listener module 302 may comprise commonly available software configured to receive email and to direct said email to the mail processing module 306. The mail processing module 306 is configured to receive said email from the mail listener module 302, and strip away the body portion from said email.

SMTP client module 304 may comprise commonly available software, such as components of a mail server application (e.g. Microsoft Exchange, Sendmail, Exim, etc.) configured to handle email communications over Simple Mail Transfer Protocol (SMTP), to send forwarded email from mail listener module 302 to a public or private network such as the Internet 120 for communication to a mail notification receiver 130.

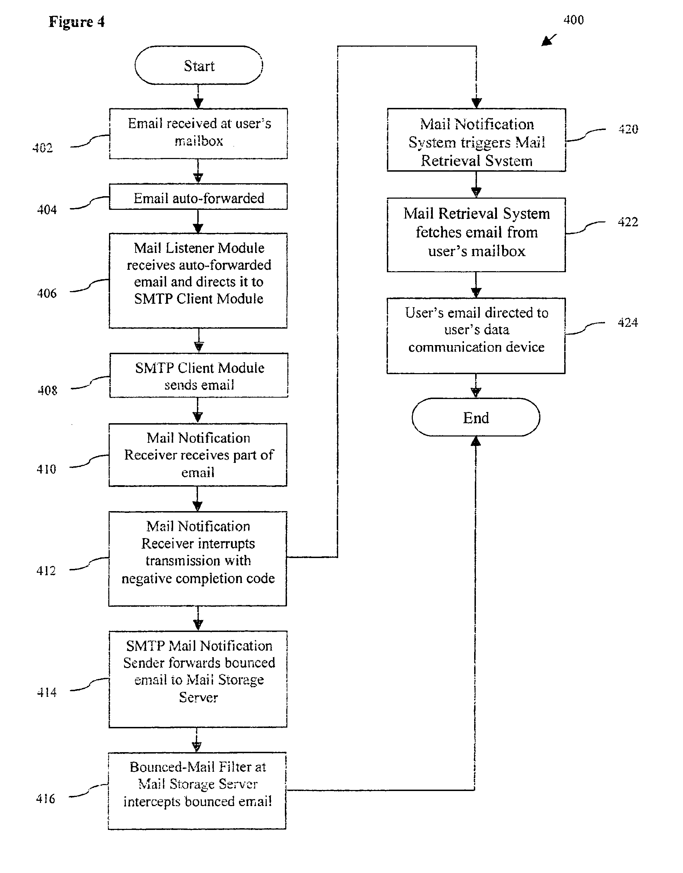

Figure 4 is a flowchart showing operations for retrieving email utilizing a non-polling mail notification system illustrated by mail notification system 100. At step 402, new email is received by the user's ISP and is directed to the user's mailbox on the ISP's mail storage server (e.g. 112). At step 404, a copy of the new email is auto-forwarded (e.g. 114) from the mail storage server to the ISP's mail notification sender (e.g. 116).

At step 406, the mail listener module (e.g. 302) of the mail notification sender receives the auto-forwarded email and directs it to the server's SMTP client module (e.g. 304). At step 408, the SMTP client module transmits the email over the public or private network (e.g. the Internet, 120) to the mail notification receiver (e.g. 130).

The mail notification receiver and the mail retrieval system (e.g. 132) are collectively responsible for retrieving the user's email and sending it to the user's data communication device (e.g. desktop and/or handheld device). At step 410, the mail notification receiver receives a part of the forwarded email from the SMTP client module. At step 412, the mail notification receiver interrupts the transmission of the forwarded email with a negative completion code before the data of the body of the message is communicated. This partly communicated email, lacking the data of the body of the message, represents a notification email. Two simultaneous chains of events follow, one from steps 414 to 416, and the other from steps 420 to 424.

At step 414, the interrupted transmission of the forwarded email triggers the SMTP mail notification sender module to define and communicate a bounced-mail email back to the user mailbox at the mail storage server from which the original email was auto-forwarded. Said bounced-mail email may contain the same negative completion code from step 412. At step 416, said bounced-mail email is intercepted and captured by the bounced-mail filter at mail storage server 112 before the bounced-mail email reaches the user's mailbox.

At step 420, the mail notification system triggers the mail retrieval system, providing it with the necessary information to retrieve new email from the user's mailbox. At step 422, the mail retrieval system initiates a mail fetch cycle, retrieving email from the user's mailbox on the ISP mail storage server. This mail fetch cycle may retrieve email for other users whose mailbox is located on the same ISP mail storage server as the user in question and may also retrieve multiple emails from a user's mailbox, despite the mail notification receiver only receiving a single mail notification email. Also, the mail notification sender or the mail notification receiver may attempt to collapse multiple notifications for a specific user into a single notification so that only one mail fetch cycle is used. At step 424, once the mail is retrieved, it is directed to the user's data communication device. Advantageously, a mail notification sender may be configured using an out-of-the-box solution operable with any mail storage server that provides auto-forwarding capability. A notification mechanism may be implemented into the mail service provider's (e.g. ISP) mail infrastructure utilizing the mail storage server's auto-forwarding functionality to send real time notifications. The mechanism may comprise an out of the box mail solution with minimal script programming to establish a bounced-mail filter at the mail storage server. Accordingly, a mail service provider can leverage existing mail server functionality and invest minimal resources for implementation.

Figure 5 is a block diagram showing components of a non-polling mail notification system 500 incorporating a subscription system in accordance with an embodiment. Briefly, the subscription system may be in the form of automatic subscriptions used by mobile office platform components 510 to enable or disable notifications of new email received at a user's mailbox.

Persons of ordinary skill in the art will appreciate that teachings herein are applicable to non-polling mail notification systems that have the ability to enable or disable notifications of new mail received at a user's mailbox, and though a subscription system that enables or disables notifications automatically in response to user actions is discussed in the examples, no limitations should be imposed as the subscription system may be in the form of a user interface provided by the user's ISP for the user to manually enable or disable notifications of new email received at a user's mailbox.

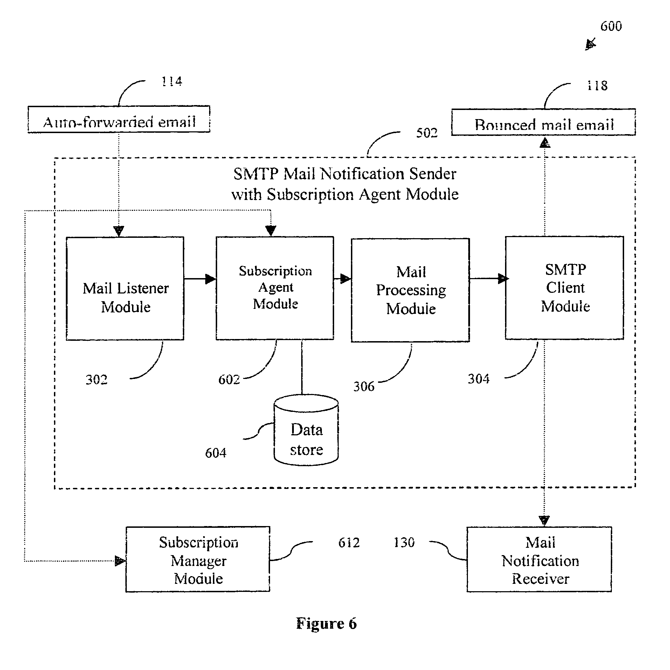

While an ISP has mailboxes for many users, mobile office platform components 510 may only need to receive notifications for a subset of those users. The subscription system is responsible for tracking this subset of users. The subscription system comprises a subscription manager module 512 and a subscription agent module 602 (see Figure 6).

Subscription manager module 512 may comprise a simple data store 514 that keeps track of subscription identifiers. Subscription manager module 512 may be used in conjunction with mail notification receiver 130 and mail retrieval system 132 to enable or disable notifications automatically as necessitated by user actions such as creation or deletion of ISP mailboxes. Subscription manager module 512 monitors user actions and sends subscription messages to subscription agent module 602. Subscription agent module 602 maintains a data store of subscriptions and uses it to decide which incoming emails are automatically passed to mail notification receiver 130.

Figure 6 is a block diagram showing further detail of mail notification sender 502 of Figure 5. Mail notification sender 502 comprises mail listener module 302, subscription agent module 602 and data store 604, and SMTP client module 304.

Subscription agent module 602 may use a simple data store 604 that keeps track of the users that are to receive notifications. When new mail notifications are desired for a user, subscription manager module 512 issues a subscription request to subscription agent module 602. Subscription agent module 602 establishes the subscription and stores the subscription details in its data store 604. Subscription agent module 602 may then generate an identifier for the subscription and send it back to subscription manager module 512. Subscription manager module 512 stores the subscription identifier in its own data store 514 to be used to disable notifications when notifications are no longer desired.

It will be understood that while the subscription agent module 602 has been shown as a part of the SMTP mail notification sender 502, the subscription agent module 602 may be implemented in different ways. For example, the mail storage server 112 may be configured to include the functionality and subscription notification information of the subscription agent module 602.

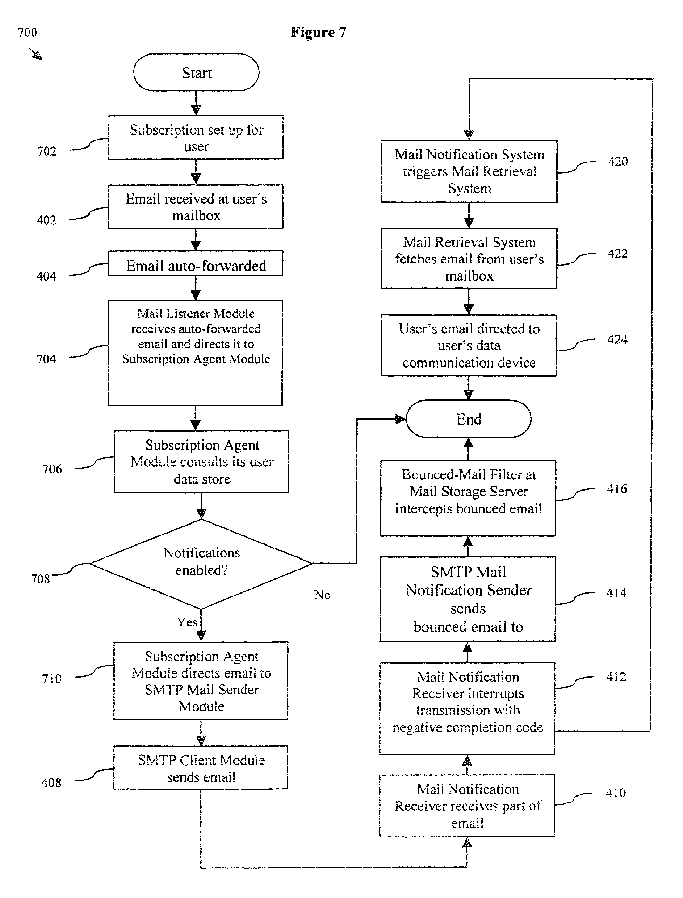

Figure 7 is a flowchart showing operations for retrieving email utilizing a non-polling mail notification system incorporating a subscription system illustrated by mail notification system 500. The operations are similar to those shown in Figure 4, except for subscription set up at step 702 and a subscription verification phase starting at step 704. At step 702, the subscription agent module (e.g. 602) receives a subscription message from the subscription manager module (e.g. 512) for a user, establishes a subscription for that user, and provides a result to the subscription manager module. Although the subscription enrolment has been described using a subscription agent module, it will be appreciated by a person skilled in the art that subscription for a user may be set up in a number of ways as understood in the art. At step 704, a forwarded mail is received by the subscription agent module from the mail listener module (e.g. 302). At step 706, the subscription agent module determines if a notification is to be forwarded to the mail notification receiver (e.g. 130) by looking at its data store (e.g. 604) of users to see if the email recipient (i.e. the user) has notifications enabled. As illustrated in step 708, if the user does not have notifications enabled, no notification email will be sent and the process will immediately end. If the user does have notifications enabled, the process will proceed. At step 710, the subscription agent module directs the pre-processed email to the SMTP client module (e.g. 304) for forwarding to the mail notification receiver. The remaining steps of 408 to 416 and 420 to 424 are similar to those illustrated in Figure 4.

Persons of ordinary skill in the art will appreciate that teachings herein are applicable to mail notification senders that have the ability to communicate with a subscription manager module, and though a separate subscription agent module is discussed in the examples, no limitations should be imposed as the functions of the subscription agent module can be incorporated into the mail processing module. Additionally, the functions of the subscription agent module can be incorporated into the mail storage server to enable or disable auto-forwarding directly at the mail storage server in order to save on bandwidth usage between the mail storage server and the mail notification sender. For instance, when notifications are no longer needed for a particular user, the subscription agent module will disable auto-forwarding at the mail storage server for that user.

Although preferred embodiments have been described herein, it will be understood by those skilled in the art that variations may be made thereto without departing from the scope of the appended claims.

## Claims

1. A method of providing notification of a new email received at a user's mailbox stored by a first mail storage system (112) for retrieval by a second mail storage system (130, 132), the method comprising:
receiving at an SMTP mail notification sender (116, 502) coupled to the first mail storage system (112) an auto-forwarded new email (114);
initiating a forwarding of a notification email comprising at least a portion of the new email (114) to said second mail storage system (130, 132) for triggering retrieval of the new email from said first mail storage system (112);
transmitting a pre-determined negative completion code from the second mail storage system (130, 132) to the first mail storage system (112) in response to the initiating a forwarding of a notification email;
receiving the pre-determined negative completion code at the SMTP mail notification sender; and
interrupting the forwarding of the notification email in response to the received pre-determined negative completion code.

2. The method according to claim 1 further comprising:
in response to receiving the pre-determined negative completion code, transmitting a bounced-mail (118) email to said first mail storage system (112), wherein the first mail storage system (112) is further configured to filter the bounced-mail email (118) and ignore the incomplete forwarding of the notification email prior to delivery to the user's mailbox.

3. The method according to any one of claims 1 or 2 wherein the SMTP mail sender (116, 502) sends a DATA command to announce the sending of email data from the notification email and wherein the second mail storage system (130, 132) sends the pre-determined negative completion code in response, thereby to interrupt the sending of an entire notification email.

4. The method according to any one of claims 1 to 3, wherein the pre-determined negative completion code comprises a 500 level negative completion code.

5. The method according to any one of claims 1 to 4, wherein the step of forwarding comprises:
selectively forwarding the notification email to said second mail storage system (130, 132) in response to a notification subscription.

6. The method of any one of claims 1 to 5 wherein said initiating a forwarding comprises an SMTP conversation (200) in accordance with an SMTP protocol, said conversation including a portion of the notification email identifying a source and a recipient; and wherein the method comprises retrieving the new email from the first storage system (112) by the second mail storage system (132).

7. A computer program product, having computer readable code embodied therein which when executed by a processor adapts a second mail system (130, 132) to retrieve new email received at a user's mailbox and stored by a first mail storage system (112), said code configuring the processor to:
transmit a pre-determined negative completion code in response to receiving an initiating of a forwarding of a notification email for said new email, said notification email comprising a portion of the new email, to interrupt said first mail storage system (112) from forwarding the notification email; and
trigger said second mail system (130, 132) to retrieve the new email from said first mail storage system (112) in response to the initiating of a forwarding of a notification email.

8. The computer program product according to claim 7, wherein said initiating a forwarding comprises an SMTP conversation (200) in accordance with an SMTP protocol, said conversation including a portion of the notification email identifying a source and a recipient of the new email.

9. The computer program product according to claims 7 or 8 wherein the pre-determined negative completion code comprises a 500 level negative completion code.

10. The computer program product according to any one of claims 7 to 9 wherein the code configures the processor to receive a DATA command from the first mail storage system (112) to announce the sending of email data from the notification email and wherein the code further configures the processor to send the pre-determined negative completion code in response, thereby to interrupt the sending of an entire notification email.

11. A system for receiving notification of a new email received at a user's mailbox stored by a mail storage system (112), the system comprising:
a mail notification receiver (130) configured to receive an initiating of a forwarding of a notification email comprising at least a portion of the new email from a mail notification sender system (116, 502) and configured to trigger a mail retrieval system (132) to retrieve said new email from said mail storage system (112), wherein the mail notification receiver (130) is further configured to provide a pre-determined negative completion code in response to the initiating of a forwarding of a notification email to interrupt the forwarding of the notification email.

12. The system according to claim 11, wherein said initiating a forwarding comprises an SMTP conversation (200) in accordance with an SMTP protocol, said SMTP conversation including a portion of the notification email identifying a source and a recipient of the new email.

13. The system according to claims 11 or 12 wherein the pre-determined negative completion code comprises a 500 level negative completion code.

14. The system according to any one of claims 11 to 13 wherein the mail notification receiver is configured to receive a DATA command from the first mail storage system (112) to announce the sending of email data from the notification email and wherein the mail notification receiver is further configured to send the pre-determined negative completion code in response, thereby to interrupt the sending of the entire notification email.

## Patentansprüche

1. Verfahren zum Vorsehen einer Benachrichtigung über eine neue Email, die an einer Mailbox eines Benutzers empfangen wird, die durch ein erstes Mail-Speichersystem (112) gespeichert ist, zum Abrufen durch ein zweites Mail-Speichersystem (130, 132), wobei das Verfahren aufweist:
Empfangen an einem SMTP-Mail-Benachrichtigungssender (116, 502), der mit dem ersten Mail-Speichersystem (112) verbunden ist, einer automatisch weitergeleiteten neuen Email (114);
Initiieren einer Weiterleitung einer Benachrichtigungsemail, die zumindest einen Teil der neuen Email (114) aufweist, an das zweite Mail-Speichersystem (130, 132) zum Auslösen eines Abrufens der neuen Email aus dem ersten Mail-Speichersystem (112);
Übertragen eines vorgegebenen negativen Ausführungscodes von dem zweiten Mail-Speichersystem (130, 132) an das erste Mail-Speichersystem (112) in Reaktion auf das Initiieren einer Weiterleitung einer Benachrichtigungs-Email;
Empfangen des vorgegebenen negativen Ausführungscodes an dem SMTP-Mail-Benachrichtigungssender; und
Unterbrechen der Weiterleitung der Benachrichtigungs-Email in Reaktion auf den empfangenen vorgegebenen negativen Ausführungscode.

2. Verfahren gemäß Anspruch 1, das weiter aufweist:
in Reaktion auf den Empfang des vorgegebenen negativen Ausführungscodes, Übertragen einer "unzustellbare Mail"(118)-Email an das erste Mail-Speichersystem (112), wobei das erste Mail-Speichersystem (112) weiter konfiguriert ist, die "unzustellbare Mail"-Email (118) zu filtern und die unvollständige Weiterleitung der Benachrichtigungs-Email vor einer Lieferung an die Mailbox des Benutzers zu ignorieren.

3. Verfahren gemäß einem der Ansprüche 1 oder 2, wobei der SMTP-Mail-Sender (116, 502) einen DATEN-Befehl sendet, um das Senden von Email-Daten von der Benachrichtigungs-Email anzukündigen, und wobei als Reaktion darauf das zweite Mail-Speichersystem (130, 132) den vorgegebenen negativen Ausführungscode sendet, wodurch das Senden einer vollständigen Benachrichtigungs-Email unterbrochen wird.

4. Verfahren gemäß einem der Ansprüche 1 bis 3, wobei der vorgegebene negative Ausführungscode einen "500 Level" negativen Ausführungscode aufweist.

5. Verfahren gemäß einem der Ansprüche 1 bis 4, wobei der Schritt des Weiterleitens aufweist:
selektives Weiterleiten der Benachrichtigungs-Email an das zweite Mail-Speichersystem (130, 132) in Reaktion auf eine Benachrichtigungssubskription.

6. Verfahren gemäß einem der Ansprüche 1 bis 5, wobei das Initiieren einer Weiterleitung eine SMTP-Konversation (200) in Übereinstimmung mit einem SMTP-Protokoll aufweist, wobei die Konversation einen Teil der Benachrichtigungs-Email umfasst, die eine Quelle und einen Empfänger identifiziert; und wobei das Verfahren ein Abrufen der neuen Email aus dem ersten Speichersystem (112) durch das zweite Mail-Speichersystem (132) aufweist.

7. Computerprogrammprodukt mit darin enthaltenem Computer-lesbaren Code, der bei Ausführung durch einen Prozessor ein zweites Mail-Speichersystem (130, 132) anpasst, neue Email abzurufen, die an einer Mailbox eines Benutzers empfangen und durch ein erstes Mail-Speichersystem (112) gespeichert wird, wobei der Code den Prozessor konfiguriert:
einen vorgegebenen negativen Ausführungscode zu übertragen in Reaktion auf einen Empfang eines Initiierens einer Weiterleitung einer Benachrichtigungs-Email für die neue Email, wobei die Benachrichtigungs-Email einen Teil der neuen Email aufweist, um das erste Mail-Speichersystem (112) von einer Weiterleitung der Benachrichtigungs-Email zu unterbrechen; und
das zweite Mail-Speichersystem (130, 132) auszulösen, die neue Email aus dem ersten Mail-Speichersystem (112) abzurufen in Reaktion auf das Initiieren einer Weiterleitung einer Benachrichtigungs-Email.

8. Computerprogrammprodukt gemäß Anspruch 7, wobei das Initiieren einer Weiterleitung eine SMTP-Konversation (200) in Übereinstimmung mit einem SMTP-Protokoll aufweist, wobei die Konversation einen Teil der Benachrichtigungs-Email umfasst, die eine Quelle und einen Empfänger der neuen Email identifiziert.

9. Computerprogrammprodukt gemäß Anspruch 7 oder 8, wobei der vorgegebene negative Ausführungscode einen "500 Level" negativen Ausführungscode aufweist.

10. Computerprogrammprodukt gemäß einem der Ansprüche 7 bis 9, wobei der Code den Prozessor konfiguriert, einen DATEN-Befehl von dem ersten Mail-Speichersystem (112) zu empfangen, um das Senden von Email-Daten von der Benachrichtigungs-Email anzukündigen, und wobei der Code den Prozessor weiter konfiguriert, als Reaktion den vorgegebenen negativen Ausführungscode zu senden, wodurch das Senden einer vollständigen Benachrichtigungs-Email unterbrochen wird.

11. System zum Empfangen einer Benachrichtigung über eine neue Email, die an einer Mailbox eines Benutzers empfangen wird, die durch ein erstes Mail-Speichersystem (112) gespeichert ist, wobei das System aufweist:
einen Mail-Benachrichtigungs-Empfänger (130), der konfiguriert ist, ein Initiieren einer Weiterleitung einer Benachrichtigungs-Email, die zumindest einen Teil der neuen Email aufweist, von einem Mail-Benachrichtigungs-Sendersystem (116, 502) zu empfangen, und konfiguriert ist, ein Mail-Abrufsystem (132) auszulösen, um die neue Email aus dem Mail-Speichersystem (112) abzurufen, wobei der Mail-Benachrichtigungs-Empfänger (130) weiter konfiguriert ist, einen vorgegebenen negativen Ausführungscode vorzusehen in Reaktion auf das Initiieren einer Weiterleitung einer Benachrichtigungs-Email, um die Weiterleitung der Benachrichtigungs-Email zu unterbrechen.

12. System gemäß Anspruch 11, wobei das Initiieren einer Weiterleitung eine SMTP-Konversation (200) in Übereinstimmung mit einem SMTP-Protokoll aufweist, wobei die SMTP-Konversation einen Teil der Benachrichtigungs-Email umfasst, die eine Quelle und einen Empfänger der neuen Email identifiziert.

13. System gemäß Anspruch 11 oder 12, wobei der vorgegebene negative Ausführungscode einen "500 Level" negativen Ausführungscode aufweist.

14. System gemäß einem der Ansprüche 11 bis 13, wobei der Mail-Benachrichtigungs-Empfänger konfiguriert ist, einen DATEN-Befehl von dem ersten Mail-Speichersystem (112) zu empfangen, um das Senden von Email-Daten von der Benachrichtigungs-Email anzukündigen, und wobei der Mail-Benachrichtigungs-Empfänger weiter konfiguriert ist, als Reaktion den vorgegebenen negativen Ausführungscode zu senden, wodurch das Senden der vollständigen Benachrichtigungs-Email unterbrochen wird.

## Revendications

1. Procédé consistant à fournir une notification de réception d'un nouveau courriel dans la boîte aux lettres d'un utilisateur stockée par un premier système de stockage de courrier (112) en vue d'une extraction par un deuxième système de stockage de courrier (130, 132), le procédé consistant à :
recevoir au niveau d'un émetteur de notification de courrier SMTP (116, 502) relié au premier système de stockage de courrier (112) un nouveau courriel réexpédié automatiquement (114) ;
déclencher une réexpédition d'un courriel de notification comprenant au moins une partie du nouveau courriel (114) audit deuxième système de stockage de courrier (130, 132) pour lancer l'extraction du nouveau courriel dudit premier système de stockage de courrier (112) ;
transmettre un code d'achèvement négatif prédéterminé du deuxième système de stockage de courrier (130, 132) au premier système de stockage de courrier (112) en réponse au déclenchement d'une réexpédition d'un courriel de notification ;
recevoir le code d'achèvement négatif prédéterminé au niveau de l'émetteur de notification par courrier SMTP ; et
interrompre la réexpédition du courriel de notification en réponse au code d'achèvement négatif prédéterminé reçu.

2. Procédé selon la revendication 1, consistant en outre à :
en réponse à la réception du code d'achèvement négatif prédéterminé, transmettre un courriel de message retourné (118) audit premier système de stockage de courrier (112), dans lequel le premier système de stockage de courrier (112) est en outre configuré pour filtrer le courriel de message retourné (118) et pour ignorer la réexpédition incomplète du courriel de notification avant sa remise dans la boîte aux lettres de l'utilisateur.

3. Procédé selon l'une quelconque des revendications 1 et 2, dans lequel l'émetteur de courrier SMTP (116, 502) envoie une commande DATA pour annoncer l'envoi de données de courriel à partir du courriel de notification et dans lequel le deuxième système de stockage (130, 132) envoie en réponse le code d'achèvement négatif prédéterminé pour ainsi interrompre l'envoi d'un courriel de notification entier.

4. Procédé selon l'une quelconque des revendications 1 à 3, dans lequel le code d'achèvement négatif prédéterminé comprend un code d'achèvement négatif de niveau 500.

5. Procédé selon l'une quelconque des revendications 1 à 4, dans lequel l'étape de réexpédition consiste à :
réexpédier sélectivement le courriel de notification audit deuxième système de stockage de courrier (130, 132) en réponse à un abonnement de notification.

6. Procédé selon l'une quelconque des revendications 1 à 5, dans lequel ledit déclenchement d'une réexpédition comprend une conversation SMTP (200) conforme à un protocole SMTP, ladite conversation comportant une partie du courriel de notification identifiant une source et un destinataire ; et dans lequel le procédé comprend l'extraction par le deuxième système de stockage de courrier (132) du nouveau courriel du premier système de stockage (112).

7. Produit à base de programme informatique comportant un code lisible par ordinateur mis en oeuvre dans celui-ci qui, lorsqu'il est exécuté par un processeur, adapte un deuxième système de courrier (130, 132) à extraire de nouveaux courriels reçus dans la boîte aux lettres d'un utilisateur et stockés par un premier système de stockage de courrier (112), ledit code configurant le processeur afin de :
transmettre un code d'achèvement négatif prédéterminé en réponse à la réception d'un déclenchement d'une réexpédition d'un courriel de notification pour ledit nouveau courriel, ledit courriel de notification comprenant une partie du nouveau courriel, afin d'interrompre la réexpédition par ledit premier système de stockage de courrier (112) du courriel de notification ; et
lancer l'extraction par ledit deuxième système de courrier (130, 132) du nouveau courriel dudit premier système de stockage de courrier (112) en réponse au déclenchement d'une réexpédition d'un courriel de notification.

8. Produit à base de programme informatique selon la revendication 7, dans lequel ledit déclenchement d'une réexpédition comprend une conversation SMTP (200) conforme à un protocole SMTP, ladite conversation comportant une partie du courriel de notification identifiant une source et un destinataire du nouveau courriel.

9. Produit à base de programme informatique selon la revendication 7 ou 8, dans lequel le code d'achèvement négatif prédéterminé comprend un code d'achèvement négatif de niveau 500.

10. Produit à base de programme informatique selon l'une quelconque des revendications 7 à 9, dans lequel le code configure le processeur afin de recevoir une commande DATA du premier système de stockage de courrier (112) pour annoncer l'envoi de données de courriel à partir du courriel de notification et dans lequel le code configure en outre le processeur afin d'envoyer en réponse le code d'achèvement négatif prédéterminé pour ainsi interrompre l'envoi d'un courriel de notification entier.

11. Système destiné à recevoir une notification d'un nouveau courriel dans la boîte aux lettres d'un utilisateur stockée par un système de stockage de courrier (112), le système comprenant :
un récepteur de notification de courrier (130) configuré pour recevoir un déclenchement d'une réexpédition d'un courriel de notification comprenant au moins une partie du nouveau courriel provenant d'un système d'envoi de notification par courrier (116, 502) et configuré pour lancer l'extraction par un système d'extraction de courrier (132) dudit nouveau courriel dudit système de stockage de courrier (112), dans lequel le récepteur de notification par courrier (130) est en outre configuré pour fournir un code d'achèvement négatif prédéterminé en réponse au déclenchement d'une réexpédition d'un courriel de notification afin d'interrompre la réexpédition du courriel de notification.

12. Système selon la revendication 11, dans lequel ledit déclenchement d'une réexpédition comprend une conversation SMTP (200) conforme à un protocole SMTP, ladite conversation SMTP comportant une partie du courriel de notification identifiant une source et un destinataire du nouveau courriel.

13. Système selon la revendication 11 ou 12, dans lequel le code d'achèvement négatif prédéterminé comprend un code d'achèvement négatif de niveau 500.

14. Système selon l'une quelconque des revendications 11 à 13, dans lequel le récepteur de notification de courrier est configuré pour recevoir une commande DATA du premier système de stockage de courrier (112) pour annoncer l'envoi de données de courriel à partir du courriel de notification et dans lequel le récepteur de notification par courrier est en outre configuré pour envoyer en réponse le code d'achèvement négatif prédéterminé afin d'interrompre ainsi l'envoi du courriel de notification entier.
